Europäisches Patentamt

European Patent Office

Office européen des brevets

(11) Numéro de publication: **0 465 287 B1**

(12) **FASCICULE DE BREVET EUROPEEN**

(45) Date de publication de fascicule du brevet: **07.09.94**

(21) Numéro de dépôt: **91401604.3**

(22) Date de dépôt: **17.06.91**

(51) Int. Cl.⁵: **C11D 3/22**, C08F 251/00, C11D 3/37

(54) Composition détergente contenant un polysaccharide greffé biodégradable.

(30) Priorité: **02.07.90 FR 9008319**

(43) Date de publication de la demande:
**08.01.92 Bulletin 92/02**

(45) Mention de la délivrance du brevet:
**07.09.94 Bulletin 94/36**

(84) Etats contractants désignés:
**AT BE CH DE DK ES FR GB GR IT LI LU NL SE**

(56) Documents cités:
**DE-A- 1 937 575**
**DE-A- 2 330 026**
**FR-A- 2 277 837**
**US-A- 3 558 499**

**CHEMICAL ABSTRACTS, vol. 105, no. 2, juillet 1986 Columbus, Ohio, USA page 109; colonne 1; ref. no. 8363 & JP-A-61031497 ( SANYO CHEMICAL IND. )**

**Römpps Chemie-Lexikon, p. 919**

(73) Titulaire: **RHONE-POULENC CHIMIE**
**25, quai Paul Doumer**
**F-92408 Courbevoie Cédex (FR)**

(72) Inventeur: **Jost, Philippe**
**34, Rue de Torcy**
**F-75018 Paris (FR)**
Inventeur: **Tournilhac, Florence**
**84, Avenue Ledru Rollin**
**F-75012 Paris (FR)**

(74) Mandataire: **Fabre, Madeleine-France et al**
**RHONE-POULENC CHIMIE**
**Service Brevets Chimie**
**25, quai Paul Doumer**
**F-92408 Courbevoie Cédex (FR)**

Rank Xerox (UK) Business Services
(3.10/3.09/3.3.3)

EP 0 465 287 B1

**Description**

La présente invention a pour objet une composition détergente contenant comme "builder" un polysaccharide greffé au moins partiellement biodégradable ; cette composition peut être utilisée pour la formulation de lessives ou de produits de nettoyage, en poudre ou liquides.

On entend par "builder" tout constituant qui améliore les performances des agents de surface d'une composition détergente. D'une manière générale un "builder" a de multiples fonctions :

- il assure au sein d'un milieu lessiviel l'enlèvement des ions indésirables, notamment alcalino-terreux (calcium, magnésium) par séquestration ou précipitation,
- il apporte une réserve d'alcalinité et de force ionique pour prévenir la précipitation des tensio-actifs anioniques,
- il maintient en suspension les salissures extraites,
- il empêche l'incrustation minérale du linge.

Pendant très longtemps, les tripolyphosphates ont été les "builders" les plus fréquemment utilisés dans les compositions détergentes et les produits de lavage. Cependant ils sont en partie responsables de l'eutrophisation des lacs et des eaux à écoulement lent lorsqu'ils ne sont pas suffisamment éliminés par les stations d'épuration des eaux ; aussi cherche-t-on à les remplacer partiellement ou totalement.

Les zéolithes seules ne peuvent remplacer les tripolyphosphates ; elles doivent être renforcées dans leur action par d'autres additifs.

Des copolymères d'acide acrylique et d'anhydride maléïque (ou leurs sels alcalins ou d'ammonium) ont été proposés (brevet européen n° 25.551) comme inhibiteurs d'incrustation. Ils présentent toutefois l'inconvénient de ne pas être biodégradables en milieu naturel.

Le brevet US 3 558 499 décrit des agents antiredépositions obtenus par greffage sur un composé polymérique, en particulier l'amidon, de monomères vinyliques comme l'acide acrylique ou méthacrylique. De même, à titre d'art antérieur illustrant la valorisation de dextrines et/ou dextranes dans des formulations détergentes, on peut également citer les brevets DE 1 937 574 et JP-A-6131497.

La demanderesse a maintenant trouvé une composition détergente présentant d'excellentes propriétés de détergence primaire et secondaire, comprenant un "builder" au moins partiellement biodégradable.

Selon l'invention, il s'agit d'une composition détergente comprenant un "builder" et un agent tensio-actif, ladite composition détergente étant caractérisée en ce que ledit "builder" inclut un polysaccharide greffé comprenant :

- un polymère tronc constitué par un polydextrose de masse moléculaire moyenne en poids inférieure à 10 000, et de préférence de l'ordre de 100 à 5000,
- et de 20 à 70 %, de préférence de 25 à 35 % en poids dudit polymère tronc de greffons dérivés d'au moins un monomère éthyléniquement insaturé hydrosoluble.

Le polydextrose est un polymère statistique de glucose contenant de petites quantités de sorbitol et d'acide citrique, obtenu par polycondensation de ces trois matières premières, il est utilisé dans le domaine alimentaire comme complément des édulcorants de synthèse. Il fait l'objet des brevets américains US N° 3.766.165 et 4.622.233.

Parmi les monomères éthyléniquement insaturés hydrosolubles susceptibles de former les motifs répétitifs des greffons, on peut citer ceux contenant au moins un groupe hydrophile tels que :

- les monoacides carboxyliques éthyléniquement insaturés : acide acrylique, acide méthacrylique.. et leurs sels alcalins ou d'ammonium,
- les diacides carboxyliques éthyléniquement insaturés : acide maléïque, acide itaconique, acide fumarique, acide crotonique... et leurs sels alcalins ou d'ammonium,
- les hydroxyacides carboxyliques éthyléniquement insaturés : acide hydroxyacrylique... et leurs sels alcalins ou d'ammonium,
- les acides sulfonés éthyléniquement insaturés : acide vinylsulfonique, acide allylsulfonique... et leurs sels alcalins ou d'ammonium,
- les alcools éthyléniquement insaturés : alcool allylique, alcool méthallylique...

D'une manière préférentielle, lesdits greffons peuvent être constitués par :

- un homopolymère d'acide acrylique ou méthacrylique,
- un copolymère d'acide acrylique ou méthacrylique et d'acide maléïque ou itaconique selon un rapport molaire monoacide/diacide de l'ordre de 50-95/50-5, de préférence de l'ordre de 55-90/45-10,
- un sel alcalin (de sodium notamment) ou d'ammonium dudit homopolymère ou dudit copolymère.

D'une manière avantageuse ledits greffons contiennent en moyenne de l'ordre de 3 à 50, de préférence en moyenne de l'ordre de 10 à 20 motifs monomères par greffon.

2

Le polydextrose greffé peut être obtenu par tout procédé connu de greffage des polysaccharides par les monomères éthyléniquement insaturés. Ledit greffage peut être réalisé par irradiation, par polymérisation radicalaire en solution aqueuse à l'aide d'amorceurs du type eau oxygénée, persulfate tel que persulfate de sodium, potassium ou ammonium ou d'un sel de cérium IV.

Un mode tout particulièrement performant de greffage est celui mettant en oeuvre un sel de Ce IV hydrosoluble ou hydrodispersable.

L'opération se déroule en milieu aqueux, et de préférence dans une solution aqueuse d'acide nitrique ou sulfurique présentant une concentration en acide de l'ordre de 0,005 à 0,1 mole/litre. Le pH du milieu réactionnel est de l'ordre de 1 à 2.

Le sel de Ce IV peut être de préférence choisi parmi le nitrate cérique, le sulfate cérique, $Ce(SO_4)_4$-$(NH_4)_4$, $Ce(NO_3)_6(NH_4)_2$.

Le mécanisme de greffage des polysaccharides par les monomères insaturés en présence de sels de cérium IV a été décrit par Munmaya K. Mishra dans "Rev. Macromol. Chem. Phys., C22(3), 471-513 (1982-1983) ainsi que par Samal et al. dans "Rev. Macromol. Chem. Phys., C26(1), 81-141 (1986)".

Le sel de Ce IV est mis en oeuvre selon une quantité pouvant aller de 10 à 300 mmoles de $Ce^{4+}$, de préférence de l'ordre de 40 mmoles à 250 mmoles de $Ce^{4+}$, pour 100 g de tronc de polydextrose.

La nature du polydextrose pouvant subir l'opération de greffage a déjà été mentionnée ci-dessus.

Il en est de même des monomères éthyléniquement insaturés hydrosolubles.

Les quantités de monomère(s) pouvant être mises en oeuvre sont de l'ordre de 20 à 70 % en poids, de préférence de l'ordre de 25 à 35 % en poids par rapport au poids de polydextrose.

La concentration totale en polydextrose et en monomère(s) éthyléniquement insaturé(s) dans le milieu aqueux de polymérisation est telle que ce dernier présente un taux d'extrait sec en poids de l'ordre de 5 à 40 % de préférence, de l'ordre de 15 à 20 % de son poids total.

L'opération de greffage par polymérisation peut être réalisée à une température de l'ordre de 20 à 60 °C et généralement de l'ordre de 35 à 45°C. Elle dure généralement de l'ordre de 2 à 4 heures.

Elle peut être réalisée en discontinu ou en continu avec introduction en continu du ou des monomères éthyléniquement insaturés dans un pied de cuve contenant le milieu aqueux, le polydextrose et l'amorceur. Lorsqu'il s'agit d'un mélange de monomères, par exemple d'acide acrylique et d'acide maléïque, il peut être intéressant d'introduire en semi-continu une partie de l'acide acrylique et l'acide maléïque dans un pied de cuve contenant le milieu aqueux, le polydextrose et l'amorceur, puis en semi-continu le reste de l'acide acrylique.

Le produit obtenu en fin de polymérisation se présente après refroidissement sous forme d'une solution faiblement visqueuse. Le produit est au moins partiellement biodégradable en milieu naturel et présente de bonnes propriétés de séquestration de cations notamment du calcium et du magnésium ainsi que l'inhition de croissance cristalline notamment du carbonate de calcium.

La quantité de polydextrose greffée entrant dans la composition détergente faisant l'objet de l'invention peut aller de 0,2 à 80 %, de préférence de 2 à 5 % du poids de ladite composition détergente.

La quantité d'agent tensio-actif entrant dans la composition détergente de l'invention peut aller de 2 à 50 %, de préférence de 6 à 30 % du poids de ladite composition détergente lorsque cette dernière est une poudre ou de 20 à 50 % lorsque cette dernière est liquide.

Parmi les agents tensio-actifs entrant dans la composition détergente faisant l'objet de l'invention, on peut citer :
- les agents tensio-actifs anioniques du type savons de métaux alcalins (sels alcalins d'acides gras en $C_8$ - $C_{24}$), sulfonates alcalins (alcoylbenzène sulfonates en $C_8$ - $C_{13}$, alcoylsulfonates en $C_{12}$ - $C_{16}$, alcools gras en $C_6$ - $C_{16}$ oxyéthylénés et sulfatés, alkylphénols en $C_8$ -$C_{13}$ oxyéthylénés et sulfatés), les sulfosuccinates alcalins (alcoyl sulfosuccinates en $C_{12}$ - $C_{16}$)...
- les agents tensio-actifs non ioniques du type alcoylphénols en $C_6$ -$C_{12}$ polyoxyéthylénés, alcools aliphatiques en $C_8$ - $C_{22}$ oxyéthylénés, les copolymères bloc oxyde d'éthylène - oxyde de propylène, les amides carboxyliques éventuellement polyoxyéthylénés,
- les agents tensio-actifs amphotères du type alcoyldiméthylbétaïnes,
- les agents tensio-actifs cationiques du type chlorures ou bromures d'alkyltriméthylammonium, d'alkyldiméthyléthylammonium.

Divers additifs peuvent en outre être ajoutés dans la composition détergente ci-dessus décrite afin d'obtenir des lessives ou des produits de nettoyage en poudre ou liquides.

Peuvent ainsi être en outre présents dans la composition détergente ci-dessus décrite :
- des "cobuilders" du type :
  . phosphates à raison de moins de 25 % du poids total de formulation,
  . zéolithes jusqu'à environ 40 % du poids total de formulation,

. carbonate de sodium jusqu'à environ 80 % du poids total de formulation,

. acide nitriloacétique jusqu'à environ 10 % du poids total de formulation,

. acide citrique, acide tartrique jusqu'à environ 20 % du poids total de formulation, la quantité totale de "builder" (polydextrose greffé + cobuilders) correspondant à environ 0,2 à 80 %, de préférence de 20 à 45 % du poids total de ladite composition détergente,

- des inhibiteurs de corrosion tels que les silicates jusqu'à environ 25 % du poids total de ladite composition détergente,

- des agents de blanchiment du type perborates, chloroisocyanates, N, N, N', N'-tétraacétyléthylènediamine (TAED) jusqu'à environ 30 % du poids total de ladite composition détergente,

- des agents anti-redéposition du type carboxyméthylcellulose, méthylcellulose en quantités pouvant aller jusqu'à environ 5 % du poids total de ladite composition détergente,

- des agents anti-incrustation du type copolymères d'acide acrylique et d'anhydride maléïque en quantité pouvant aller jusqu'à 10 % environ du poids total de ladite composition détergente,

- des charges du type sulfate de sodium pour les détergents en poudre en quantité pouvant aller jusqu'à 50 % du poids total de ladite composition détergente,

- de l'eau pour les détergents liquides en quantité pouvant aller jusqu'à 80 % du poids total de ladite composition détergente.

La composition détergente faisant l'objet de l'invention présente une bonne efficacité que ce soit en détergence primaire (enlèvement des salissures au bout d'un cycle de lavage) ou en détergence secondaire (anti-redéposition et anti-incrustation après plusieurs cycles de lavage).

Les exemples suivants sont présentés à titre illustratif et non limitatif de la présente invention.


EXEMPLE 1

L'essai est réalisée en batch dans un erlenmeyer de 100 ml placé dans un banc d'agitation KOTTERMAN® ( commercialisé par Labo service), en mettant en oeuvre:

- 5 g de poudre de polydextrose partiellement neutralisée de type K commercialisé par Pfizer (une solution aqueuse à 10 % a un Ph 5-6) ; sa distribution moléculaire en poids est telle que prés de 90 % du produit présente une masse moléculaire en poids inférieure à 5000.

- 2,5 g d'acide acrylique

- 40 mmoles de $Ce^{4+}$ pour 100 g de polydextrose, sous forme d'ammonium $Ce^{IV}$ sulfate

- 0,035 mole par litre d'acide nitrique

- de l'eau jusqu'à obtenir un extrait sec de 27 % en poids.

Les différents ingrédients sont mélangés ; la solution est portée à 40° C pendant deux heures, puis on la laisse refroidir.

La capacité de séquestration des ions calcium du produit obtenu est mesurée à l'aide d'une électrode présentant une membrane sélective perméable aux ions calcium. On trace d'abord une courbe d'étalonnage en mettant en oeuvre 100 ml d'une solution de chlorure de sodium à 3 g/l de pH 10,5 dans laquelle on ajoute des quantités d'ions calcium variant de $10^{-5}$ à $3 \times 10^{-3}$ mole/l et on trace la courbe potentiel délivré par l' électrode en fonction de la concentration en ions $Ca^{2+}$ libres.

Ensuite on pèse 0,1 g de polymère (sec) auquel on ajoute de l'eau jusqu'à obtenir 100 g de solution et 0,3 g de chlorure de sodium en poudre ; le pH est ajusté à environ 10,5 par de la soude en solution aqueuse.

On trace la droite $[Ca^{2+}]$ libre/ $[Ca^{2+}]$ fixé = f ($[Ca^{2+}]$ libre)

A partir de cette droite on détermine :

- la constante de complexation K des ions calcium du polymère

- le nombre So de sites de complexation du polymère

définis par :

$$\frac{[Ca^{2+}]\ libre}{[Ca^{2+}]\ fixé} = \frac{1}{KSo} + \frac{1}{So}\ [Ca2+]\ libre$$

On constate que le produit obtenu présente :

- un nombre de sites de complexation So = $2 \times 10^{-3}$ sites/g de polydextrose greffé.

- une constante de complexation log K = 3,6

EXEMPLE 2

On répète l'opération décrite à l'exemple précédent à partir de :
- 5 g de polydextrose de type K
- 10 g d'acide acrylique
- 40 mmoles de $Ce^{4+}$ pour 100 g de polydextrose, sous forme d'ammonium $Ce^{IV}$ sulfate
- 0,035 mole par litre d'acide nitrique
- de l'eau jusqu'à obtenir un extrait sec de 21 % en poids.
  Le produit obtenu présente :
- un nombre de sites de complexation So = 3,1 x 10$^{-3}$ sites/g
- une constante de complexation log K = 4,1

La propriété d'inhibition de cristallisation du carbonate de calcium de ce produit est mise en évidence en utilisant la méthode décrite par Z. Amjad dans Langmuir 1987, 3, 224-228.

La mesure est réalisée dans une cellule fermée thermostatée à l'aide d'une solution sursaturée à 10$^{-3}$ mole/l de bicarbonate de sodium et à 2 x 10$^{-3}$ mole/l de chlorure de calcium (pH =8,6), à laquelle on ajoute 5 g/l de carbonate de calcium de synthèse (surface spécifique = 80 m$^2$/g ; diamètre théorique = 20 nm) ; on mesure la diminution de la vitesse de cristallisation du carbonate de calcium obtenue par addition de 500 ppm (exprimé en sec) du polydextrose greffé préparé ci-dessus.

On constate que le rapport :
constante de desorption $k_d$/constante d'adsorption $k_a$ = 0,06

EXEMPLE 3

L'essai est réalisé en semi continu à 40° C dans un réacteur de 250 ml. On forme un pied de cuve à l'aide de :
- 15 g de polydextrose de type K
- 0,065 mole par litre d'acide nitrique
- 0,83 g d'ammonium $Ce^{IV}$ nitrate
- 97 g d'eau On introduit en semi-continu pendant 1 heure
- 7,5 g d'acide acrylique
- 7,5 g d'eau

Le taux d'extrait sec du milieu est de 16 % en poids. On maintient le milieu encore 1 heure à 40° C.
  Le produit obtenu présente :
- un nombre de sites de complexation So = 2 x 10$^{-3}$ sites/g
- une constante de complexation log K = 4,1

EXEMPLE 4

On réalise l'essai décrit à l'exemple 3 à l'aide d'un pied de cuve contenant :
- 15 g de polydextrose de type K
- 0,06 mole par litre d'acide nitrique
- 17,75 g d'ammonium $Ce^{IV}$ nitrate
- 97 g d'eau

et en introduisant en semi-continu
- 7,5 g d'acide acrylique
- 7,5 g d'eau

Le taux d'extrait sec du milieu est de 22 % en poids.
  Le produit obtenu présente :
- un nombre de sites de complexation So = 1,1 x 10$^{-3}$ sites/g
- une constante de complexation log K = 4,2

EXEMPLE 5

On réalise l'opération décrite à l'exemple 1 à l'aide de :
- 5 g de polydextrose de type K
- 2,5 g d'acide acrylique
- 80 mmoles de $Ce^{4+}$ pour 100 g de polydextrose sous forme d'ammonium $Ce^{IV}$ sulfate
- 0,035 mole/l d'acide nitrique

- de l'eau jusqu'à obtention d'un extrait sec de 20 % en poids.

Le produit obtenu présente :

- un nombre de sites de complexation So = 1,4 x 10$^{-3}$ sites/g
- une constante de complexation log K = 3,9

Sa propriété d'inhibition de cristalllsation du carbonate de calcium correspondant à un rapport : constante de desorption $k_d$/constante d'adsorption $k_a$ = 0,11

EXEMPLE 6

On réalise l'opération décrite à l'exemple 1 à l'aide de :

- 5 g de polydextrose de type K
- 2,5 g d'acide acrylique
- 10 mmoles de Ce$^{4+}$ pour 100 g de polydextrose sous forme d'ammonium Ce$^{IV}$ nitrate
- 0,06 mole/l d'acide nitrique
- de l'eau jusqu'à obtention un extrait sec de 20 % en poids. le produit obtenu présente :
- un nombre de sites de complexation So = 1,5 x 10$^{-3}$ sites/g
- une constante de complexation log K = 4,1

Le biodégradabilité "ultime" de ce produit est mesurée selon la norme AFNOR T90-312 (en conformité avec la norme internationale ISO 7827).

Le test est réalisé à partir :

- d'un inoculum obtenu par filtration d'eau d'entrée de la station d'épuration urbaine de Saint Germain au Mont d'Or (Rhône).
- d'un milieu d'essai contenant 4 x 10$^7$ bactéries/ml
- d'une quantité de produit à tester telle que le milieu d'essai contienne une concentration en carbone organique de l'ordre de 40 mg/l.

Le taux de biodégradabilité du produit testé en fonction du temps est le suivant :

| TEMPS (jours) | BIODEGRABILITE (%) |
|:---:|:---:|
| 0 | 0 |
| 2 | 13 |
| 5 | 31 |
| 9 | 31 |
| 13 | 33 |
| 22 | 47 |
| 28 | 44 |

EXEMPLE 7

On répète l'opération décrite à l'exemple 1 à partir de :

- 5 g de polydextrose de type K
- 2,5 g d'acide acrylique
- 100 mmoles de Ce$^{4+}$ pour 100 g de polydextrose sous forme d'ammonium Ce$^{IV}$ sulfate
- 0,03 mole/l d'acide nitrique
- de l'eau jusqu'à obtention un extrait sec de 20 %.

Le produit obtenu présente :

- un nombre de sites de complexation So = 2 x 10$^{-3}$ sites/g
- une constante de complexation log K = 3,5
- un taux de biodégradabilité en fonction du temps de

| TEMPS (jours) | BIODEGRADABILITE % |
|---|---|
| 0 | 0 |
| 7 | 46 |
| 14 | 53 |
| 21 | 53 |

- un rapport constante de désorption $K_d$/ constante d'adsorption $k_a$ = 0,11

## EXEMPLE 8

L'effet du' produit de l'exemple 7 comme inhibiteur d'incrustation est mis en évidence comme suit.

L'incrustation d'un textile coton TESTFABRIC 405® est évaluée après 20 lavages en machine lave-linge avec un lessive en poudre standard contenant 24 % en poids de zéolithe 4 A et 3 % en poids de polysaccharide greffé à tester. Les lavages sont effectués à 75° C et suivis d'un séchage.

L'incrustation minérale est calculée à partir du taux de cendres des tissus lavés et brûlés à 950° C pendant 3 heures.

| Composition de la lessive | % en poids |
|---|---|
| - alkylbenzène sulfonate linéaire | 7,5 |
| - CEMULSOL LA 90● (acide laurique polyoxyethyléné commercialisé par S.F.O.S.) | 4 |
| - Zéolithe 4 A | 24 |
| - Silicate de Na (SiO$_2$/Na$_2$O = 2) | 1,5 |
| - carbonate de Na | 10 |
| - TAED | 0,1 |
| - Perborate de Na | 15 |
| - éthylenediamine tétracétique | 0,9 |
| - produit à tester | 3 |
| - Tinopal DMSX● | 0,1 |
| - Tinopal SOP● | 0,1 |
| (azurants commercialisés par CIBA - CEIGY) | |
| - antimousse siliconé | 0,2 |
| - alcalase | 0,15 % |
| - savinase | 0,15 % |
| (enzymes) | |
| - sulfate de Na | qsp 100 % |

Les résultats sont les suivants:

| produit à tester | taux de cendres (% par rapport au poids total du coton) |
|---|---|
| . témoin ( sans polysaccharide greffé) | 2,62 |
| . celui de l'exemple 7 | 1,40 |

**Revendications**

1.  Composition détergente comprenant un "builder" et un agent tensio-actif, caractérisée en ce que ledit "builder" inclut un polysaccharide greffé comprenant :
    -   un polymère tronc constitué par un polymère statistique obtenu pu polycondensation de glucose, de petites quantités de sorbitol et d'acide citrique et possédant une de masse moléculaire moyenne en poids inférieure à 10 000,
    -   et de 20 a 70 % en poids dudit polymère tronc de greffons dérivés d'au moins un monomère éthyléniquement insaturé hydrosoluble.

8

**2.** Composition détergente selon la revendication 1 caractérisée en ce que le polymère tronc est de préférence constitué par un polydextrose de masse moléculaire moyenne en poids inférieure à 5 000 et par 25 à 35% en poids dudit polymère tronc de greffons dérivés d'au moins un monomère éthyléniquement insaturé hydrosoluble.

**3.** Composition détergente selon la revendication 1 caractérisée en ce que ledit "builder" est obtenu par greffage d'un polymère tronc de masse moléculaire moyenne en poids inférieure à 10 000 par 20 à 70% du poids dudit polymère d'au moins un monomère éthyléniquement insaturé hydrosoluble.

**4.** Composition détergente suivant la revendication 3 caractérisée en ce que ledit polysaccharide greffé est obtenu par greffage d'un polymère tronc de masse moléculaire moyenne en poids inférieure à 5 000 par 25 à 35% du poids dudit polymère d'au moins un monomère éthyléniquement insaturé hydrosoluble.

**5.** Composition détergente selon l'une des revendications 3 ou 4 caractérisée en ce que ledit polysaccharide greffé est obtenu à l'issue d'une opération de greffage réalisée en milieux aqueux à un pH de l'ordre de 1 à 2 en présence d'acide nitrique ou sulfurique et d'un sel de cérium IV hydrosoluble ou hydrodispersable selon une quantité pouvant aller de 10 à 300 moles de $Ce^{4+}$ pour 100g de polydextrose à une température de 20 à 60°C.

**6.** Composition détergente selon l'une quelconque des revendications 1 à 5 caractérisée en ce que ledit monomère éthyléniquement insaturé hydrosoluble est un :
.   monoacide carboxylique éthyléniquement insaturé,
.   diacide carboxylique éthyléniquement insaturé,
.   acide sulfoné éthyléniquement insaturé,
.   sel alcalin ou d'ammonium de ces acides,
.   un alcool éthyléniquement insaturé.

**7.** Composition détergente selon la revendication 6 caractérisée en ce que ledit monomère éthyléniquement insaturé hydrosoluble est :
.   l'acide acrylique,
.   l'acide méthacrylique,
.   un mélange acide acrylique ou méthacrylique / acide maléique ou itaconique selon un rapport molaire monoacide / diacide de l'ordre de 50 - 95 / 50 - 5,
.   un sel alcalin ou d'ammonium de ces acides.

**8.** Composition détergente selon l'une quelconque des revendications 1 à 7 caractérisée en ce que ledit polysaccharide greffé représente de 0,2 à 80 % du poids de ladite composition détergente.

**9.** Composition détergente selon la revendication 8 caractérisée en ce que ledit polysaccharide greffé représente de 2 à 5% du poids de ladite composition détergente.

**10.** Composition détergente selon l'une quelconque des revendications 1 à 9 caractérisée en ce que l'agent tensio-actif représente de 2 à 50 % du poids de ladite composition lorsque celle-ci est en poudre et de 20 à 50% du poids de ladite composition lorsque celle-ci est liquide.

**11.** Composition détergente selon l'une quelconque des revendications 1 à 1 0 caractérisée en ce qu'elle renferme moins de 25% en poids de phosphates.

## Claims

**1.** Detergent composition comprising a "builder" and a surfactant, characterized in that the said "builder" includes a graft polysaccharide comprising:
-   a polymer backbone consisting of a random polymer obtained by polycondensation of glucose, small amounts of sorbitol and citric acid, which has a weight-average molecular mass of less than 10,000
-   and from 20 to 70 % by weight of the said polymer backbone of grafts derived from at least one water-soluble ethylenically unsaturated monomer.

2. Detergent composition according to Claim 1, characterized in that the polymer backbone preferably consists of a polydextrose with a eight-average molecular mass of less than 5,000 and of 25 to 35 % by weight of the said polymer backbone of grafts derived from at least one water-soluble ethylenically unsaturated monomer.

3. Detergent composition according to Claim 1, characterized in that the said "builder" is obtained by grafting onto a polymer backbone, with a weight-average molecular mass of less than 10,000 20 to 70 % of the weight of the said polymer of at least one water-soluble ethylenically unsaturated monomer.

4. Detergent composition according to Claim 3, characterized in that the said graft polysaccharide is obtained by grafting onto a polymer backbone with a weight-average molecular mass of less than 5,000 25 to 35 % of the weight of the said polymer of at least one water-soluble ethylenically unsaturated monomer.

5. Detergent composition according to either of Claims 3 and 4, characterized in that the said graft polysaccharide is obtained at the end of a grafting operation carried out in an aqueous medium at a pH of the order of 1 to 2 in the presence of nitric or sulphuric acid and a water-soluble or water-dispersible cerium(IV) salt in an amount which may range from 10 to 300 mmoles of $Ce^{4+}$ per 100 g of polydextrose, at a temperature of 20 to 60°C.

6. Detergent composition according to any one of Claims 1 to 5, characterized in that the said water-soluble ethylenically unsaturated monomer is an:
   - ethylenically unsaturated carboxylic mono-acid,
   - ethylenically unsaturated carboxylic diacid,
   - ethylenically unsaturated sulphonic acid,
   - an alkali metal or ammonium salt of these acids,
   - an ethylenically unsaturated alcohol.

7. Detergent composition according to Claim 6, characterized in that the said water-soluble ethylenically unsaturated monomer is:
   - acrylic acid,
   - methacrylic acid,
   - a mixture of acrylic or methacrylic acid/maleic or itaconic acid in accordance with a molar ratio of monoacid/diacid of the order of 50-95/50-5,
   - an alkali metal or ammonium salt of these acids.

8. Detergent composition according to any one of Claims 1 to 7, characterized in that the said graft polysaccharide represents from 0.2 to 80 % of the weight of the said detergent composition.

9. Detergent composition according to Claim 8, characterized in that the said graft polysaccharide represents from 2 to 5 % of the weight of the said detergent composition.

10. Detergent composition according to any one of Claims 1 to 9, characterized in that the surfactant represents from 2 to 50 % of the weight of the said composition when the latter is a powder and from 20 to 50 % of the weight of the said composition when the latter is liquid.

11. Detergent composition according to any one of Claims 1 to 10, characterized in that it contains less than 25 % by weight of phosphates.

**Patentansprüche**

1. Detergens-Zusammensetzung enthaltend einen "Builder" und ein tensioaktives Mittel, dadurch gekennzeichnet, daß der o.a. "Builder" ein aufgepfropftes Polysaccharid enthält, beinhaltend:
   - ein Rumpfpolymer, gebildet aus einem statistischen Polymer, das durch Polykondensation von Glucose, geringen Mengen von Sorbitol und Zitronensäure erhalten wurde, und das eine mitllere molekulare Masse von kleiner als 10.000 hat.
   - zwischen 20 und 70 Gew.-% des o.a. Polymers aus einem Pfropfderivat aus mindestens einem wasserlöslichen, ethylenisch ungesättigten Monomer.

2.  Detergens-Zusammensetzung nach Anspruch 1, dadurch gekennzeichnet, daß das Rumpfpolymer vorzugsweise aus Polydextrose mit einer mittleren molekularen Masse von Kleiner als 5.000 und aus 25 bis 35 Gew.-% des o.a. Polymers aus einem Pfropfderivat mindestens eines wasserlöslichen, ethylenisch ungesättigten Monomers besteht.

3.  Detergens-Zusammensetzung nach Anspruch 1, dadurch gekennzeichnet, daß der o.a. "Builder" durch Aufpfropfen von 20 bis 70 Gew.-% des o.a. aus mindestens einem wasserlöslichen, ethylenisch ungesättigten Monomer bestehenden Polymers auf ein Rumpfpolymer mit einer mittleren Molekularmasse von kleiner als 10.000 erhalten wird.

4.  Detergens-Zusammensetzung nach Anspruch 3, dadurch gekennzeichnet, daß das o.a. aufgepfropfte Polysaccharid durch Aufpfropfen von 25 bis 35 Gew.-% des o.a. aus mindestens einem wasserlöslichen, ethylenisch ungesättigten Monomer bestehenden Polymers auf ein Rumpfpolymer mit einer mittleren Molekularmasse von Kleiner als 5.000 erhalten wird.

5.  Detergens-Zusammensetzung nach einem der Ansprüche 3 oder 4, dadurch gekennzeichnet, daß das o.a. aufgepfropfte Polysaccharid nach der Aufpfropf-Stufe erhalten wird, die im wässrigen Medium bei einem pH-Wert von 1 bis 2 in Gegenwart von Salpeter- oder Schwefelsäure und eines wasserlöslichen oder in Wasser dispergierbaren Cer-IV-Salzes, dessen Menge zwischen 10 und 300 Mol $Ce^{4+}$ pro 100 g Polydextrose betragen kann, bei einer Temperatur von 20 bis 60 °C durchgeführt wird.

6.  Detergens-Zusammensetzung nach einem der Ansprüche 1 bis 5, dadurch gekennzeichnet, daß das o.a. wasserlösliche, ethylenisch ungesättigte Monomer
    - eine ethylenisch ungesättigte Monocarbonsäure,
    - eine ethylenisch ungesättigte Dicarbonsäure,
    - eine ethylenisch ungesättigte Sulfonsäure,
    - ein Alkali- oder Ammoniumsalz dieser Säuren,
    - oder ein ethylenisch ungesättigter Alkohol
    ist.

7.  Detergens-Zusammensetzung nach Anspruch 6, dadurch gekennzeichnet, daß das o.a. wasserlösliche, ethylenisch ungesättigte Monomer
    - eine Acrylsäure,
    - eine Methacrylsäure,
    - eine Mischung von Acryl- oder Methacrylsäure mit Malein- oder Itaconsäure mit einem molaren Verhältnis zwischen Mono- und Dicarbonäure von 50-95 / 50-05,
    - ein Alkali- oder Ammoniumsalz dieser Säuren
    ist.

8.  Detergens-Zusammensetzung nach einem der Ansprüche 1 bis 7, dadurch gekennzeichnet, daß das o.a. aufgepfropfte Polysaccharid 0,2 bis 80 Gew.-% der o.a. Detergens-Zusammensetzung darstellt.

9.  Detergens-Zusammensetzung nach Anspruch 9, dadurch gekennzeichnet, daß das o.a. aufgepfropfte Polysaccharid 2 bis 5 Gew.-% der o.a. Detergens-Zusammensetzung darstellt.

10. Detergens-Zusammensetzung nach einem der Ansprüche 1 bis 9, dadurch gekennzeichnet, daß das tensio-aktive Mittel 2 bis 50 Gew.-% der o.a. Zusammensetzung - wenn sie pulverförmig ist - und 20 bis 50 Gew.-% der o.a. Zusammensetzung - wenn sie flüssig ist - darstellt.

11. Detergens-Zusammensetzung nach einem der Ansprüche 1 bis 10, dadurch gekennzeichnet, daß sie weniger als 25 Gew.-% Phosphat enthält.